(19) Europäisches Patentamt
European Patent Office
Office européen des brevets

(11) **EP 3 178 640 A1**

(12) **EUROPÄISCHE PATENTANMELDUNG**

(43) Veröffentlichungstag:
14.06.2017 Patentblatt 2017/24

(51) Int Cl.:
*B29D 11/00* *(2006.01)*

(21) Anmeldenummer: 16203073.8

(22) Anmeldetag: 09.12.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 11.12.2015 CH 18202015

(71) Anmelder: Interglass Technology AG
6330 Cham (CH)

(72) Erfinder:
• WEITENEDER, Christophe
6207 Nottwil (CH)
• PIOTROWSKI, Daniel
6312 Steinhausen (CH)
• BITSCHNAU, Martin
6404 Greppen (CH)
• KOERNER, Lutz
8902 Urdorf (CH)

(74) Vertreter: Falk, Urs
Patentanwaltsbüro Dr. Urs Falk
Eichholzweg 9A
6312 Steinhausen (CH)

(54) **VERFAHREN UND VORRICHTUNG ZUM AUSRICHTEN UND VERBINDEN VON ZWEI FORMSCHALEN**

(57) Die Erfindung betrifft ein Verfahren und eine Vorrichtung zum Ausrichten und anschliessenden Verbinden von zwei Formschalen (2, 4) zu einem Verbund, der eine Moldkavität zum Giessen einer Linse bildet. Die erste Formschale (2) weist eine Eingiessöffnung (10) auf. Die Drehlage der ersten Formschale (2) wird mittels eines ersten optischen Sensors (5) bestimmt, dessen Messsignal die Lage der Eingiessöffnung (10) widerspiegelt. Die Drehlage der zweiten Formschale (4) wird mittels eines zweiten optischen Sensors (6) ermittelt, dessen Messsignal die torische Topographie der zweiten Formschale (4) widerspiegelt.

Fig. 1

**Beschreibung**

Technisches Gebiet

Die Erfindung betrifft ein Verfahren zum Ausrichten und anschliessenden Verbinden von zwei Formschalen zu einem Verbund, der eine Moldkavität zum Giessen einer Linse bildet.

Hintergrund der Erfindung

Ein solches Verfahren wird verwendet bei der Herstellung von Linsen nach dem bekannten Giessverfahren, bei dem ein Monomer in eine durch zwei Formschalen und eine Dichtung begrenzte Kavität gegossen und beispielsweise mittels UV-Strahlung ausgehärtet wird. Bei der Aushärtung wird das Monomer polymerisiert, wobei die Linse entsteht. Die Dichtung wird dann entfernt und die Linse von den beiden Formschalen getrennt. Solche Herstellungsverfahren sind beispielsweise bekannt aus EP 15202 und WO 02/087861. Solche Linsen werden auch als ophthalmische Linsen bezeichnet.

Eine solche Linse ist ein Halbfabrikat, aus dem später beispielsweise von einem Optiker ein Brillenglas herausgeschnitten und in ein Brillengestell eingepasst wird.

Aus der EP 1612032 ist ein Verfahren zum gegenseitigen Ausrichten und Verbinden der beiden Formschalen bekannt. Die Formschalen enthalten an ihrem Rand je eine Markierung (sogenannte Tabo Markierung), die die Drehlage der Formschale charakterisiert. Die jeweilige Lage der Markierung wird mittels eines Sensors erfasst und die Formschale dann dementsprechend ausgerichtet. Die Markierung ist eine in den Rand der Formschale geritzte Kerbe. Oftmals fliesst Monomer in die Kerbe, so dass die Kerbe jeweils gereinigt werden muss, was stark ätzende chemische Lösungen oder auch mechanisches Auskratzen erfordert. Dies führt dazu, dass viele Formschalen bereits nach einigen zehn Zyklen kaputt gehen.

Der Erfindung liegt die Aufgabe zugrunde, ein Verfahren und eine Vorrichtung für die Erfassung der Drehlage der Formschalen zu entwickeln, das zu einer grösseren Robustheit der Formschalen führt.

Die genannte Aufgabe wird erfindungsgemäss gelöst durch die Merkmale der Ansprüche 1 und 6. Vorteilhafte Ausgestaltungen ergeben sich aus den abhängigen Ansprüchen.

Die beigefügten Zeichnungen, die in diese Beschreibung aufgenommen sind und einen Teil dieser Beschreibung bilden, veranschaulichen eine oder mehrere Ausführungsformen der vorliegenden Erfindung und dienen zusammen mit der detaillierten Beschreibung dazu, die Prinzipien und Implementierungen der Erfindung zu erläutern. Aus Gründen der Übersichtlichkeit sind die Figuren nicht massstäblich gezeichnet.

Beschreibung der Figuren

Fig. 1    zeigt die für das Verständnis der Erfindung erforderlichen Teile einer Vorrichtung zum Ausrichten von zwei Formschalen,

Fig. 2    illustriert den Aufbau und das Messprinzip zum Bestimmen der Drehlage einer Formschale mit einer Eingiessöffnung,

Fig. 3    illustriert den Aufbau und das Messprinzip zum Bestimmen der Drehlage einer Formschale mit einer torischen Oberfläche, und

Fig. 4, 5    zeigen Diagramme mit Messdaten.

Detaillierte Beschreibung der Erfindung

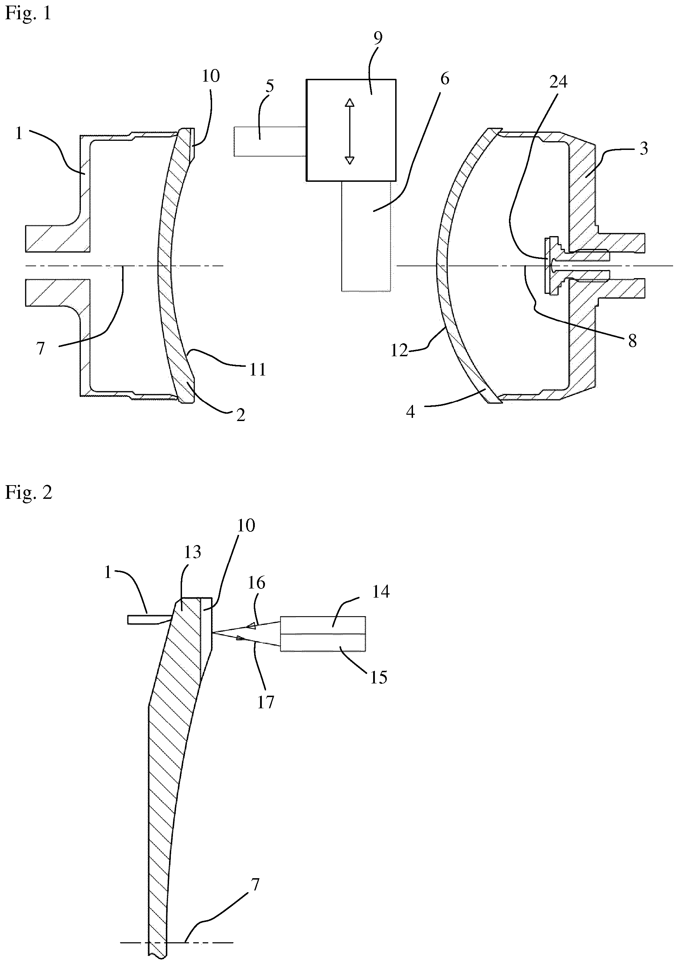

Die Erfindung betrifft ein Verfahren zum Ausrichten einer ersten Formschale und einer zweiten Formschale und anschliessendem Verbinden der beiden Formschalen mittels eines Dichtungselementes zu einem Verbund, der einen Hohlraum zum Giessen einer Linse bildet, und eine zur Durchführung des erfindungsgemässen Verfahrens geeignete Vorrichtung. Die Fig. 1 zeigt schematisch die für das Verständnis der Erfindung erforderlichen Teile der Vorrichtung.

Die Vorrichtung umfasst einen ersten Greifer 1, der eine erste Formschale 2 ergriffen hat, und einen zweiten Greifer 3, der eine zweite Formschale 4 ergriffen hat, sowie zwei verschiebbare optische Sensoren 5 und 6. Der erste Greifer 1 ist mittels eines nicht dargestellten ersten Motors um eine erste Drehachse 7 drehbar, der zweite Greifer 3 ist mittels eines nicht dargestellten zweiten Motors um eine zweite Drehachse 8 drehbar. Die beiden Drehachsen 7, 8 fluchten miteinander. Die optischen Sensoren 5 und 6 sind an einer Halterung 9 befestigt, die in einer durch einen Doppelpfeil dargestellten Richtung zwischen einer Messposition und einer Parkposition verschiebbar ist. Die optischen Sensoren 5 und 6 werden für die Messung in die Messposition, die sich - wie dargestellt - im Raum zwischen den beiden Formschalen 2 und 4 befindet, gebracht und werden nach abgeschlossener Messung in eine nicht dargestellte Parkposition ausserhalb des Raums zwischen den beiden Formschalen 2 und 4 weggefahren, so dass die Greifer 1 und 3 die Formschalen 2 und 4 im geforderten Abstand zueinander positionieren können und das Dichtungselement angebracht werden kann.

Die erste Formschale 2 weist eine Eingiessöffnung 10 auf. Die erste Formschale 2 weist typischerweise eine kugelförmige Formfläche 11, die zweite Formschale 4 typischerweise eine torische Formfläche 12 auf. Die beiden Formflächen 11, 12 sind einander zugewandt. Alternativ ist es auch möglich, dass die erste Formschale 2 eine torische Formfläche und die zweite Formschale 4 eine kugelförmige Formfläche aufweist.

Die Formschalen 2 und 4 haben je eine optische Achse. Wenn die Formschalen 2 und 4 zu dem Verbund verbunden sind, dann fallen ihre optischen Achsen im Idealfall zusammen. Je nach Anwendung sind kleinere oder grössere Abweichungen tolerierbar.

Die Vorrichtung ist so konzipiert, dass dann, wenn der erste Greifer 1 die erste Formschale 2 und der zweite Greifer 3 die zweite Formschale 4 ergriffen hat, die optische Achse der ersten Formschale 2 und die Drehachse 7 des ersten Greifers 1 innerhalb vorgegebener Toleranzen zusammenfallen, und die optische Achse der zweiten Formschale 4 und die Drehachse 8 des zweiten Greifers 3 innerhalb vorgegebener Toleranzen zusammenfallen.

Die Vorrichtung ist weiter mit nicht dargestellten Mitteln eingerichtet, um die beiden Formschalen 2 und 4 mittels eines Tapes oder eines anderen Dichtungselementes zu einem Verbund zu verbinden. Eine Vorrichtung zum Verbinden der beiden Formschalen 2 und 4 mit dem Tape ist in der EP 1612032 dargestellt und wird hiermit durch Verweis in Bezug genommen.

Die Fig. 2 illustriert den Aufbau und das Messprinzip zum Bestimmen der Drehlage einer Formschale 13 mit einer Eingiessöffnung 10. Der erste optische Sensor 5 umfasst eine Lichtquelle 14 und einen Lichtempfänger 15. Die Lichtquelle 14 sendet einen Lichtstrahl 16 aus, der im Bereich des Randes auf die Formschale 13 auftrifft, damit die Eingiessöffnung 10 detektiert werden kann, und dort reflektiert wird. Der Lichtempfänger 15 erfasst die Intensität des reflektierten Lichtstrahls 17.

Die Lichtquelle 14 und der Lichtempfänger 15 können alternativ an die ersten Enden von zwei als Lichtwellenleiter dienenden Glasfibern angekoppelt und die beiden anderen Enden der beiden Glasfibern an der Halterung 9 befestigt sein. Dies ermöglicht es, die Lichtquelle 14 und den Lichtempfänger 15 an einem beliebigen geeigneten Ort an der Vorrichtung anzubringen.

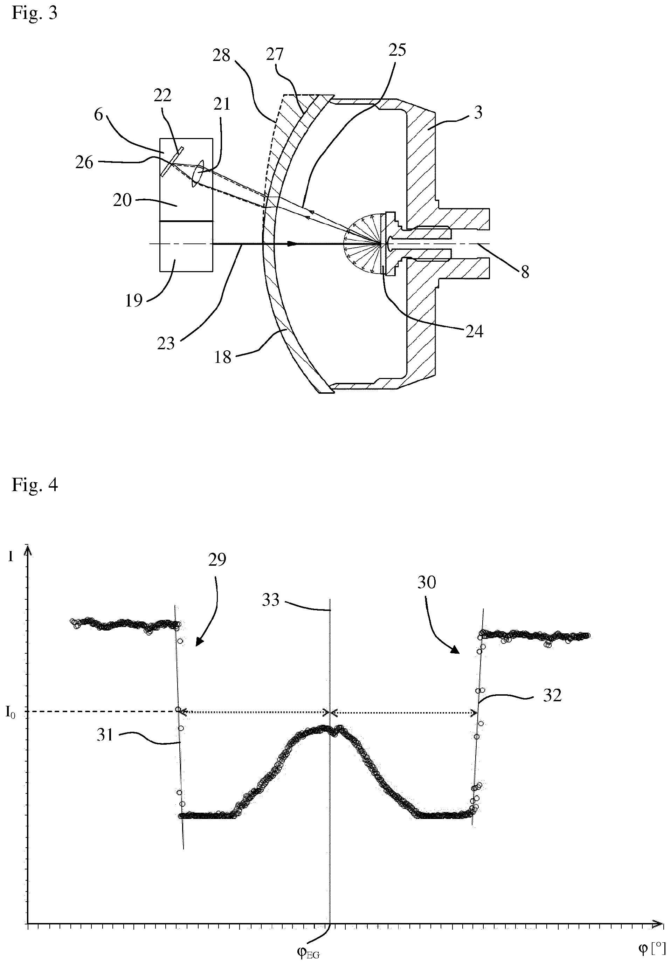

Die Fig. 3 illustriert den Aufbau und das Messprinzip zum Bestimmen der Drehlage einer Formschale 18 mit einer torischen Oberfläche. Der zweite optische Sensor 6 umfasst eine Lichtquelle 19 und einen Lichtempfänger 20. Der Lichtempfänger 20 enthält eine Optik 21 und einen Detektor 22. Wenn sich die Halterung 9 in der Messposition befindet, dann verläuft ein von der Lichtquelle 19 ausgesandter Lichtstrahl 23 entlang der Drehachse 8 des zweiten Greifers 3 und trifft auf eine am zweiten Greifer 3 angeordnete Streuscheibe 24 auf, die den auftreffenden Lichtstrahl 23 diffus streut, wie dies durch eine Vielzahl von Pfeilen dargestellt ist. Ein Teil des diffus gestreuten Lichts bildet einen schräg zur Drehachse 8 des zweiten Greifers 3 verlaufenden Lichtstrahl 25, der als Lichtpunkt 26 auf den Detektor 22 auftrifft. Der Lichtstrahl 25 wird beim Durchgang durch die Formschale 18 zweimal gebrochen, nämlich an der Innenseite und an der Aussenseite. Der Brechungswinkel hängt ab von der Topographie der Oberfläche der Formschale 18. Weil sich die Topographie beim Drehen des zweiten Greifers 3 ändert, ergibt sich eine Verschiebung des Ortes D, an dem der Lichtpunkt 26 auf den Detektor 22 auftrifft. Die Änderung der Topographie wird in der Fig.

3 dadurch illustriert, dass die Extrema des Verlaufs der Oberfläche der Formschale 18, die bei einer Drehung des zweiten Greifers 3 um die Drehachse 8 um 360° auftreten, durch eine ausgezogene Linie 27 und eine gestrichelte Linie 28 dargestellt sind und die dadurch bewirkte Änderung des an den Oberflächen der Formschale 18 gebrochenen Lichtstrahls 25 wird ebenfalls als ausgezogene bzw. gestrichelte Linie dargestellt. Der Detektor 22 erfasst diese vom Drehwinkel $\theta$ der Formschale 18 abhängige Position D des Lichtpunkts 26. Als optischer Sensor 6 eignen sich beispielsweise von der OMRON Corporation unter der Bezeichnung "Laser Displacement Sensor CMOS Type, ZX2 Series" vertriebene Sensoren oder auch Triangulationssensoren anderer Hersteller.

Das erfindungsgemässe Verfahren wird nun im Detail beschrieben, es umfasst folgende Schritte:

> 1. Ergreifen der ersten Formschale 2 mit dem ersten Greifer 1.

> 2. Drehen des ersten Greifers 1 um die erste Drehachse 7 und mit dem ersten optischen Sensor 5 Erfassen von ersten Messdaten durch Abtasten eines Bereichs der Oberfläche der ersten Formschale 2.

Wenn sich der erste Greifer 1 um seine Drehachse 7 dreht, trifft der Lichtstrahl 16 entlang einer Kreislinie auf die erste Formschale 2 auf. Der erste optische Sensor 5 liefert somit ein Messsignal $I(\varphi)$, das der Intensität I des reflektierten Lichtstrahls 17 in Funktion des Drehwinkels $\varphi$ des ersten Greifers 1 entspricht. Die Intensität $I(\varphi)$ spiegelt die Topographie der ersten Formschale 2 entlang der Kreislinie wider, auf die der Lichtstrahl 16 bei der Messung auftrifft. Abtasten bedeutet, dass das Messsignal in Form von ersten diskreten Messdaten $I_k(\varphi_k)$ erfasst und wenn nötig zwischengespeichert wird, wobei der Index k die ganzen Zahlen 1 bis n durchläuft und n eine vorbestimmte Ganzzahl ist.

> 3. Bestimmen der Drehlage der Eingiessöffnung der ersten Formschale 2 anhand der ersten Messdaten $I_k(\varphi_k)$.

Details zu der Datenverarbeitung werden weiter unten anhand der Fig. 4 erläutert.

> 4. Ergreifen der zweiten Formschale 4 mit dem zweiten Greifer 3.

> 5. Drehen des zweiten Greifers 3 und mit dem zweiten optischen Sensor 6 Erfassen von zweiten Messdaten durch Abtasten eines Bereichs der Oberfläche der zweiten Formschale 4.

Wenn sich der zweite Greifer 3 um seine Drehachse 8 dreht, trifft der Lichtstrahl 25 entlang einer Kreislinie auf die zweite Formschale 4 auf. Der zweite optische Sensor 6 liefert somit ein Messsignal $D(\theta)$, das die Po-

sition D des an der Oberfläche der zweiten Formschale 4 gebrochenen und von der Optik 21 als Lichtpunkt 26 auf den Detektor 22 abgebildeten Lichtstrahls 25 in Funktion des Drehwinkels θ des zweiten Greifers 3 charakterisiert. Die Position D(θ) wiederum spiegelt die Topographie der zweiten Formschale 4 entlang der Kreislinie wider, auf die der Lichtstrahl 25 bei der Messung auftrifft. Abtasten bedeutet, dass das Messsignal in Form von zweiten diskreten Messdaten $D_k(\theta_k)$ erfasst und wenn nötig zwischengespeichert wird, wobei der Index k die ganzen Zahlen 1 bis m durchläuft und m eine vorbestimmte Ganzzahl ist.

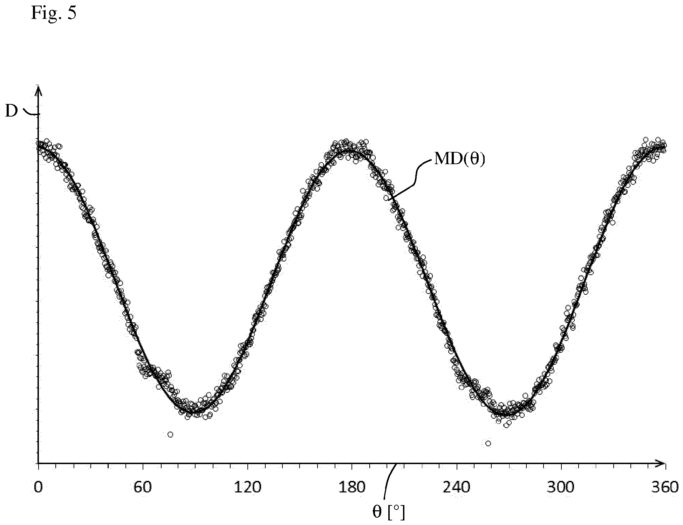

Details zu der Datenverarbeitung werden weiter unten anhand der Fig. 5 erläutert.

6. Bestimmen der Drehlage der zweiten Formschale 4 anhand der zweiten Messdaten $D_k(\theta_k)$.

7. Drehen des ersten Greifers 1 in eine Drehlage, in der die Eingiessöffnung 10 der ersten Formschale 2 eine vorbestimmte Lage einnimmt.

Bevorzugt wird die Drehlage so eingestellt, dass die Eingiessöffnung 10 der ersten Formschale 2 oben ist.

8. Drehen des zweiten Greifers 3 in eine Drehlage, in der die zweite Formschale 4 eine vorbestimmte Drehlage einnimmt.

Die Drehlage der zweiten Formschale 4 wird entsprechend der Drehlage der ersten Formschale 2 so eingestellt, dass die Linse die geforderten optischen Eigenschaften haben wird.

9. Verbinden der ersten und zweiten Formschale mittels eines Dichtungselementes.

Das Dichtungselement ist beispielsweise ein Tape oder ein in der Fachwelt als "gasket" bekanntes Element, das aus Gummi oder gummiähnlichem Material besteht.

Die Fig. 4 zeigt von dem ersten optischen Sensor 5 erfasste Messdaten $I_k(\varphi_k)$, wie sie sich im Bereich der Eingiessöffnung 10 (Fig. 1) ergeben. Die Intensität I des reflektierten Lichtstrahls 17 ist annähernd konstant in den Bereichen ausserhalb der Eingiessöffnung 10 und erfährt markante Änderungen bei den Winkeln, wo die Eingiessöffnung 10 beginnt und endet. Die markanten Änderungen zeigen sich als eine stark abfallende Flanke 29, wo die Eingiessöffnung 10 beginnt, und eine stark ansteigende Flanke 30, wo die Eingiessöffnung 10 endet. Das Zentrum der Eingiessöffnung 10 befindet sich in der Mitte zwischen den beiden Flanken 29 und 30. Der das Zentrum der Eingiessöffnung 10 kennzeichnende Winkel $\varphi_{EG}$ kann mit üblichen mathematischen Methoden beispielsweise aus der Lage der Flanken 29 und 30 berechnet werden. In der Fig. 4 sind zwei Geraden 31 und 32 dargestellt, die an die Messwerte auf den Flanken 29 und 30 gefittet sind. Der Winkel $\varphi_{EG}$ befindet sich auf der Geraden 33, die bei einer vorgegebenen Intensität $I_0$ gleich weit von den beiden Geraden 31 und 32 entfernt ist. Die vorbestimmte Lage der Eingiessöffnung 10 ist beispielsweise diejenige Lage, bei der die Eingiessöffnung 10 oben ist, so dass das Monomer von oben in die durch die beiden Formschalen 2 und 4 gebildete Moldkavität eingegossen werden kann.

Die Fig. 5 zeigt die von dem zweiten optischen Sensor 6 in Funktion des Drehwinkels θ erfassten Messdaten $D_k(\theta_k)$ (einzelne Punkte) und eine die Messdaten darstellende Funktion MD(θ) (ausgezogene Linie). Der Messbereich erstreckt sich bei diesem Beispiel über eine vollständige Umdrehung, d.h. über 360°. Auf der horizontalen Achse ist der Drehwinkel θ eingetragen, auf der vertikalen Achse das Messsignal D, das der von dem zweiten optischen Sensor 6 gemessenen Position D entspricht. Die Erfinder haben herausgefunden, dass die Drehlage der zweiten Formschale 4 mit optimaler Genauigkeit bestimmt werden kann, wenn die Messdaten MD(θ) durch eine Fourierreihe der Form

$$MD(\varphi) = \frac{a_0}{2} + \sum_{k=1}^{n} a_k \cos(k\varphi - \Phi_k)$$

dargestellt werden, wobei der Parameter n eine vorbestimmte Ganzzahl ist. Mittels einer mathematischen Ausgleichsrechnung, z.B. der Methode der Fast Fourier Transformation oder der Methode der kleinsten Quadrate ("least squares fit"), wird aus den zweiten Messdaten die Phase $\Phi_1$ dieser Funktion ermittelt. Die Phase $\Phi_1$ stellt die Drehlage der zweiten Formschale 4 dar. Es hat sich gezeigt, dass bereits mit n=2 die Drehlage der zweiten Formschale 4 mit hoher Genauigkeit ermittelt werden kann. Das Ziel der mathematischen Ausgleichung ist, dass sich die Funktion MD(φ) den zweiten Messdaten bestmöglich anpasst.

Die Erfindung macht es möglich, die beiden Formschalen optisch, ohne die Hilfe einer eingeritzten Kerbe, so zueinander auszurichten, wie es das Linsenrezept erfordert. Der Winkel zwischen den beiden Formschalen bestimmt nämlich die Achslage des Zylinders, mit dem der Astigmatismus korrigiert wird. Die Formschalen sind daher ohne eine mechanische Markierung, z.B. Kerbe, ausgebildet.

Während Ausführungsformen und Anwendungen dieser Erfindung gezeigt und beschrieben wurden, ist es für Fachleute, die den Vorteil dieser Offenbarung haben, offensichtlich, dass viele weitere Modifikationen als oben erwähnt möglich sind, ohne von dem hierin erläuterten erfinderischen Konzept abzuweichen. Die Erfindung ist daher nur durch die Ansprüche beschränkt.

**Patentansprüche**

1.  Verfahren zum Ausrichten einer ersten Formschale (2) und einer zweiten Formschale (4) und anschliessendem Verbinden zu einem Verbund, der einen Hohlraum zum Giessen einer Linse bildet, wobei die erste Formschale (2) eine Eingiessöffnung (10) aufweist, umfassend folgende Schritte:

    Ergreifen der ersten Formschale (2) mit einem um eine erste Drehachse (7) drehbaren ersten Greifer (1), derart, dass eine optische Achse der ersten Formschale (2) und die erste Drehachse (7) des ersten Greifers (1) innerhalb vorgegebener Toleranzen zusammenfallen,
    Drehen des ersten Greifers (1) um die erste Drehachse (7) und mit einem ersten optischen Sensor (5) Erfassen von ersten Messdaten durch Abtasten eines Bereichs der Oberfläche der ersten Formschale (2),
    Bestimmen der Drehlage der Eingiessöffnung (10) der ersten Formschale (2) anhand der ersten Messdaten,
    Ergreifen der zweiten Formschale (4) mit einem um eine zweite Drehachse (8) drehbaren zweiten Greifer (3), derart, dass eine optische Achse der zweiten Formschale (4) und die zweite Drehachse (8) des zweiten Greifers (3) innerhalb vorgegebener Toleranzen zusammenfallen,
    Drehen des zweiten Greifers (3) um die zweite Drehachse (8) und mit einem zweiten optischen Sensor (6) Erfassen von zweiten Messdaten durch Abtasten eines Bereichs der Oberfläche der zweiten Formschale (4),
    Bestimmen der Drehlage der zweiten Formschale (4) anhand der zweiten Messdaten,
    Drehen des ersten Greifers (1) in eine Drehlage, in der die Eingiessöffnung (10) der ersten Formschale (2) eine vorbestimmte Lage einnimmt,
    Drehen des zweiten Greifers (3) in eine Drehlage, in der die zweite Formschale (4) eine vorbestimmte Drehlage einnimmt, und
    Verbinden der ersten Formschale (2) und der zweiten Formschale (4) mittels eines Dichtungselementes.

2.  Verfahren nach Anspruch 1, **dadurch gekennzeichnet, dass** das Abtasten eines Bereichs der Oberfläche der ersten Formschale (2) das Aussenden eines Lichtstrahls (16) und Messen einer Intensität des von der ersten Formschale (2) reflektierten Lichtstrahls (17) beinhaltet.

3.  Verfahren nach Anspruch 1 oder 2, **dadurch gekennzeichnet, dass** das Abtasten eines Bereichs der Oberfläche der zweiten Formschale (4) das Aussenden eines zweiten Lichtstrahls (23) und das Messen eines Ortes beinhaltet, an dem ein Anteil des an einer am zweiten Greifer (3) angebrachten Streuscheibe (24) diffus gestreuten Lichtstrahls (23) von einer Optik (21) als Lichtpunkt (26) auf einen Detektor (22) abgebildet wird.

4.  Verfahren nach einem der Ansprüche 1 bis 3, **dadurch gekennzeichnet, dass** mittels einer mathematischen Ausgleichsrechnung aus den zweiten Messdaten als Wert für die Drehlage der zweiten Formschale (4) die Phase $\Phi_1$ einer Funktion

$$MD(\varphi) = \frac{a_0}{2} + \sum_{k=1}^{n} a_k \cos(k\varphi - \Phi_k)$$ ermittelt

    wird, wobei n eine vorbestimmte Ganzzahl ist.

5.  Verfahren nach Anspruch 4, **dadurch gekennzeichnet, dass** n=2 ist.

6.  Vorrichtung zum Ausrichten einer ersten Formschale (2) und einer zweiten Formschale (4) und anschliessendem Verbinden zu einem Verbund, der einen Hohlraum zum Giessen einer Linse bildet, wobei die erste Formschale (2) eine Eingiessöffnung (10) aufweist, umfassend:

    einen motorisierten, um eine erste Drehachse (7) drehbaren ersten Greifer (1),
    einen motorisierten, um eine zweite Drehachse (8) drehbaren zweiten Greifer (3),
    einen ersten optischen Sensor (5) zum Erfassen von ersten Messdaten durch Abtasten eines Bereichs der Oberfläche der ersten Formschale (2),
    einen zweiten optischen Sensor (6) zum Erfassen von zweiten Messdaten durch Abtasten eines Bereichs der Oberfläche der zweiten Formschale (4),
    eine Steuer- und Recheneinheit zum Bestimmen der Drehlage der Eingiessöffnung (10) der ersten Formschale (2) anhand der ersten Messdaten, zum Bestimmen der Drehlage der zweiten Formschale (4) anhand der zweiten Messdaten, zum Drehen des ersten Greifers (1) in eine Drehlage, in der die Eingiessöffnung (10) der ersten Formschale (2) eine vorbestimmte Lage einnimmt, zum Drehen des zweiten Greifers (3) in eine Drehlage, in der die zweite Formschale (4) eine vorbestimmte Drehlage einnimmt, und
    eine Vorrichtung zum Verbinden der ersten Formschale (2) und der zweiten Formschale (4) mittels eines Dichtungselementes.

7.  Vorrichtung nach Anspruch 6, **dadurch gekennzeichnet, dass** der erste optische Sensor (5) eine erste Lichtquelle (14) und einen ersten Lichtempfänger (15) aufweist, der eine Intensität des auftreffenden Lichts misst, wobei die erste Lichtquelle (14) einen Lichtstrahl (16) aussendet, der von der ersten Formschale (2) reflektiert wird und als reflektierter Lichtstrahl (17) auf den ersten Lichtempfänger (15) auftrifft.

8. Vorrichtung nach Anspruch 6 oder 7, **dadurch gekennzeichnet, dass** der zweite optische Sensor (6) eine zweite Lichtquelle (19) und einen Lichtempfänger (20) mit einer Optik (21) und einem Detektor (22) aufweist, wobei die zweite Lichtquelle (19) einen zweiten Lichtstrahl (23) aussendet, der an einer an dem zweiten Greifer (3) angeordneten Streuscheibe (24) diffus gestreut wird, wobei ein Anteil des diffus gestreuten Lichts von der Optik (21) als Lichtpunkt (26) auf den Detektor (22) abgebildet wird, und wobei der Detektor (22) ein Messsignal liefert, das einem Auftreffort des Lichtpunkts (26) auf dem Detektor (22) entspricht.

**Fig. 1**

**Fig. 2**

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 16 20 3073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D<br>A | EP 1 612 032 A1 (INTERGLASS TECHNOLOGY AG [CH]) 4. Januar 2006 (2006-01-04)<br>* Absatz [0018] *<br>* Absatz [0030] - Absatz [0033] *<br>* Ansprüche 1,5,7 *<br>* Abbildungen *<br>----- | 1,6<br><br>2-5,7,8 | INV.<br>B29D11/00 |
| Y<br>A | US 2010/102463 A1 (ARNET ROMAN [CH]) 29. April 2010 (2010-04-29)<br>* Absatz [0032] - Absatz [0033] *<br>* Absatz [0049] *<br>* Abbildungen 2,3 *<br>----- | 1,6<br><br>2-5,7,8 | |
| A | US 4 615 847 A (HOWDEN HARRY [GB]) 7. Oktober 1986 (1986-10-07)<br>* Spalte 3, Zeile 44 - Zeile 60 *<br>* Abbildungen 1,2 *<br>----- | 1,2,6,7 | |
| A | EP 1 607 211 A1 (INTERGLASS TECHNOLOGY AG [CH]) 21. Dezember 2005 (2005-12-21)<br>* Absatz [0025] - Absatz [0026] *<br>* Spalte 6, Zeile 27 - Spalte 7, Zeile 30 *<br>* Abbildungen 1-3 *<br>----- | 1-8 | |
| A | US 6 082 987 A (SU KAI C [US] ET AL) 4. Juli 2000 (2000-07-04)<br>* Spalte 13, Zeile 35 - Zeile 54 *<br>* Abbildungen 7-14 *<br>----- | 1-8 | RECHERCHIERTE SACHGEBIETE (IPC)<br><br>B29D |
| A | US 6 821 461 B1 (BESSIERE BENOIT [FR] ET AL) 23. November 2004 (2004-11-23)<br>* Spalte 1, Zeile 36 - Zeile 39 *<br>* Abbildungen 7-14 *<br>* Spalte 1, Zeile 55 - Spalte 2, Zeile 31 *<br>* Spalte 3, Zeile 66 - Spalte 4, Zeile 8 *<br>* Abbildung *<br>-----<br>-/-- | 1-8 | |

Der vorliegende Recherchenbericht wurde für alle Patentansprüche erstellt

| Recherchenort | Abschlußdatum der Recherche | Prüfer |
|---|---|---|
| Den Haag | 26. April 2017 | Jensen, Kjeld |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 1 von 2

Europäisches Patentamt

European Patent Office

Office européen des brevets

# EUROPÄISCHER RECHERCHENBERICHT

**Nummer der Anmeldung**

EP 16 20 3073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2010/025868 A1 (LOUH SEI-PING [TW]) 4. Februar 2010 (2010-02-04) * das ganze Dokument * ----- | 1-8 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 26. April 2017 | Jensen, Kjeld |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 20 3073

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2017

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 1612032 | A1 | | 04-01-2006 | AT | 340069 | T | 15-10-2006 |
| | | | | BR | PI0511759 | A | 08-01-2008 |
| | | | | CN | 1972797 | A | 30-05-2007 |
| | | | | EP | 1612032 | A1 | 04-01-2006 |
| | | | | ES | 2273161 | T3 | 01-05-2007 |
| | | | | HK | 1103230 | A1 | 02-02-2011 |
| | | | | JP | 4680258 | B2 | 11-05-2011 |
| | | | | JP | 2008504156 | A | 14-02-2008 |
| | | | | MA | 28647 | B1 | 01-06-2007 |
| | | | | PT | 1612032 | E | 31-01-2007 |
| | | | | RU | 2364508 | C2 | 20-08-2009 |
| | | | | US | 2007124919 | A1 | 07-06-2007 |
| | | | | WO | 2006003099 | A1 | 12-01-2006 |
| US 2010102463 | A1 | | 29-04-2010 | AT | 516074 | T | 15-07-2011 |
| | | | | BR | PI0808644 | A2 | 12-08-2014 |
| | | | | CN | 101626823 | A | 13-01-2010 |
| | | | | EP | 1967258 | A1 | 10-09-2008 |
| | | | | EP | 2134456 | A1 | 23-12-2009 |
| | | | | ES | 2369752 | T3 | 05-12-2011 |
| | | | | JP | 2010522631 | A | 08-07-2010 |
| | | | | MA | 31286 | B1 | 01-04-2010 |
| | | | | PT | 2134456 | E | 01-09-2011 |
| | | | | RU | 2009136681 | A | 20-04-2011 |
| | | | | US | 2010102463 | A1 | 29-04-2010 |
| | | | | WO | 2008107413 | A1 | 12-09-2008 |
| US 4615847 | A | | 07-10-1986 | DE | 3571003 | D1 | 20-07-1989 |
| | | | | EP | 0154382 | A2 | 11-09-1985 |
| | | | | GB | 2155388 | A | 25-09-1985 |
| | | | | JP | H0469095 | B2 | 05-11-1992 |
| | | | | JP | S60215551 | A | 28-10-1985 |
| | | | | US | 4615847 | A | 07-10-1986 |
| EP 1607211 | A1 | | 21-12-2005 | AT | 339297 | T | 15-10-2006 |
| | | | | BR | PI0511148 | A | 27-11-2007 |
| | | | | CN | 1956839 | A | 02-05-2007 |
| | | | | EP | 1607211 | A1 | 21-12-2005 |
| | | | | ES | 2273159 | T3 | 01-05-2007 |
| | | | | HK | 1103231 | A1 | 11-12-2009 |
| | | | | JP | 4630900 | B2 | 09-02-2011 |
| | | | | JP | 2007537898 | A | 27-12-2007 |
| | | | | MA | 28661 | B1 | 01-06-2007 |
| | | | | PT | 1607211 | E | 31-01-2007 |
| | | | | RU | 2364507 | C2 | 20-08-2009 |
| | | | | WO | 2005113221 | A1 | 01-12-2005 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 16 20 3073

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2017

| Im Recherchenbericht angeführtes Patentdokument | Datum der Veröffentlichung | Mitglied(er) der Patentfamilie | Datum der Veröffentlichung |
|---|---|---|---|
| US 6082987 A | 04-07-2000 | AU 6172798 A | 09-09-1998 |
| | | AU 6658698 A | 09-09-1998 |
| | | CN 1249703 A | 05-04-2000 |
| | | CN 1249710 A | 05-04-2000 |
| | | EP 1009581 A1 | 21-06-2000 |
| | | EP 1009624 A1 | 21-06-2000 |
| | | JP 2001512374 A | 21-08-2001 |
| | | JP 2001512383 A | 21-08-2001 |
| | | KR 20000075461 A | 15-12-2000 |
| | | KR 20000075488 A | 15-12-2000 |
| | | US 6068464 A | 30-05-2000 |
| | | US 6082987 A | 04-07-2000 |
| | | US 6099763 A | 08-08-2000 |
| | | WO 9836868 A1 | 27-08-1998 |
| | | WO 9836898 A1 | 27-08-1998 |
| US 6821461 B1 | 23-11-2004 | AT 249332 T | 15-09-2003 |
| | | AU 765808 B2 | 02-10-2003 |
| | | CA 2375003 A1 | 07-12-2000 |
| | | DE 60005176 D1 | 16-10-2003 |
| | | EP 1181150 A1 | 27-02-2002 |
| | | ES 2206220 T3 | 16-05-2004 |
| | | FR 2794055 A1 | 01-12-2000 |
| | | JP 2003500257 A | 07-01-2003 |
| | | US 6821461 B1 | 23-11-2004 |
| | | WO 0073048 A1 | 07-12-2000 |
| US 2010025868 A1 | 04-02-2010 | CN 101637951 A | 03-02-2010 |
| | | US 2010025868 A1 | 04-02-2010 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 15202 A
- WO 02087861 A
- EP 1612032 A